# EUROPÄISCHE PATENTSCHRIFT

(11) **EP 0 484 641 B1**
(45) Veröffentlichungstag und Bekanntmachung des Hinweises auf die Patenterteilung: **23.03.1994**
(21) Anmeldenummer: 91114130.7
(22) Anmeldetag: 23.08.1991
(51) Int. Cl.: B60K 11/04, F01P 3/18

(54) **Halterung für einen Kühler**
Mounting support for a vehicle radiator
Fixation pour radiateur

(30) Priorität: 07.11.1990 DE 4035347
(43) Veröffentlichungstag der Anmeldung: 13.05.1992
(73) Patentinhaber: Dr.Ing.h.c. F. Porsche Aktiengesellschaft, 70435 Stuttgart (DE)
(72) Erfinder: Murau, Heinz, W-7000 Stuttgart 40 (DE); Baumann, Hans-Uwe, W-7000 Stuttgart 40 (DE)

(56) Entgegenhaltungen:
- CH-A- 212 092
- DE-A- 3 446 752
- DE-U- 8 634 544
- FR-A- 2 478 551
- US-A- 3 334 704

## Beschreibung

Die Erfindung betrifft eine Halterung für einen Kühler eines Kraftfahrzeuges, der benachbart eines frontseitigen Verkleidungsteiles der Stoßstange angeordnet ist.

Kühler für Kraftfahrzeuge werden aus Gründen der Durchströmung dicht hinter Verkleidungsteilen der Karosserie angebracht, so daß schon bei leichten Verformungen dieser Verkleidungsteile, wie sie z.B. bei einem Auffahrunfall vorkommen, der Kühler in Mitleidenschaft gezogen wird. Durch die Elastizität der Verkleidungsteile können diese unter Umständen aufgrund ihrer elastischen Eigenschaften ohne bleibende Verformungen in ihre Ausgangslage zurückfedern. Bei Ölkühlern, die in der Regel unterhalb des Stoßfängers angebracht und dadurch häufig leichteren Kontakten mit Bordsteinen und ähnlichem ausgesetzt sind, besteht hierdurch eine Möglichkeit der Beschädigung.

Aus der DE-A 34 46 752 ist eine Halterung für einen Ölkühler eines Kraftfahrzeuges bekannt, der um eine quer zur Fahrtrichtung angeordnete Achse schwenkbar gelagert ist und im unteren Bereich mittels einer Gummilasche fahrzeugfest gehalten wird. Nachteilig hierbei ist, daß für diese Halterung mehrere fahrzeugfeste Befestigungspunkte benötigt werden und die Gummilasche zudem den Kühler bei einem Auffahrunfall und dgl. nicht sofort freigibt, sondern erst ab einer bestimmten, unter anderem von der Temperatur und dem Alterungszustands des Gummis abhängigen Kraft auf den Kühler reißt und ersetzt werden muß.

Die FR-A 2 478 551 zeigt eine Kühleranordnung für Kraftfahrzeuge mit einem in der Fahrzeugfrontpartie hinter einer Lufteintrittsöffnung angeordnetem Kühler, der um eine horizontale und quer zur Fahrtrichtung angeordnete Achse schwenkbar ist. Mit zunehmender Fahrtgeschwindigkeit wird der Kühler durch den Staudruck oder durch Hilfskraft verschwenkt, so daß sein Lufteintrittsquerschnitt verkleinert wird. In anderen Ausführungen sind mit dem Kühler Hilfsmittel verbunden, die den Eintrittsquerschnitt der Lufteintrittsöffnung verringern.

Aufgabe der Erfindung ist es, eine Halterung der genannten Gattung zu schaffen, die sicherstellt, daß der Kühler bei einem Aufprall der Verkleidung bzw. des Stoßfängers unbeschädigt und funktionsfähig bleibt.

Erfindungsgemäß wird diese Aufgabe durch die Merkmale des Anspruchs 1 gelöst. Weitere, die Erfindung ausgestaltende Merkmale sind in den Unteransprüchen enthalten.

Die erfindungsgemäße Halterung wird in vorteilhafter Weise nur über eine durch zwei Lager gebildete Schwenkachse mit dem Fahrzeug verbunden. So wird neben den beiden Befestigungspunkten der Schwenkachse kein weiterer Befestigungspunkt benötigt und damit der Bauaufwand verringert. Der Kühler ist in den Konsolen formschlüssig gelagert und diese Konsolen werden durch Federn in ihrer Arbeitsstellung gehalten. Hierdurch verringert sich der Montageaufwand (größere Toleranzen, kein Ausrichten) und die Zahl der Verbindungsstellen, die sich beispielsweise durch Vibrationen unbeabsichtigt lösen können. Bei einem Aufprall wird der Kühler elastisch und gleichmäßig gegen die Federkraft ausgelenkt. Dadurch werden Beschädigungen des Kühlers infolge von Kraftspitzen, die beispielsweise beim Reißen einer Gummilasche auftreten, vermieden.

In der Zeichnung wird ein Ausführungsbeispiel der Erfindung gezeigt, das nachstehend näher beschrieben ist.

Es zeigen:
- Fig. 1: eine Ansicht von vorn auf ein Kraftfahrzeug,
- Fig. 2: eine Vorderansicht der erfindungsgemäßen Halterung mit Teilschnitt und
- Fig. 3: eine Ansicht in Blickrichtung X der Fig. 2.

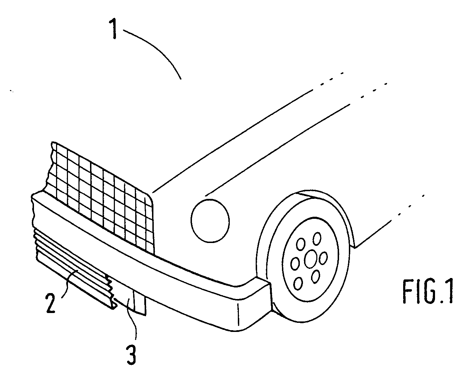

In Fig. 1 ist ein Kraftfahrzeug 1 dargestellt, das ein elastisches Verkleidungsteil 2 umfaßt, hinter dem der Ölkühler 3 befestigt ist.

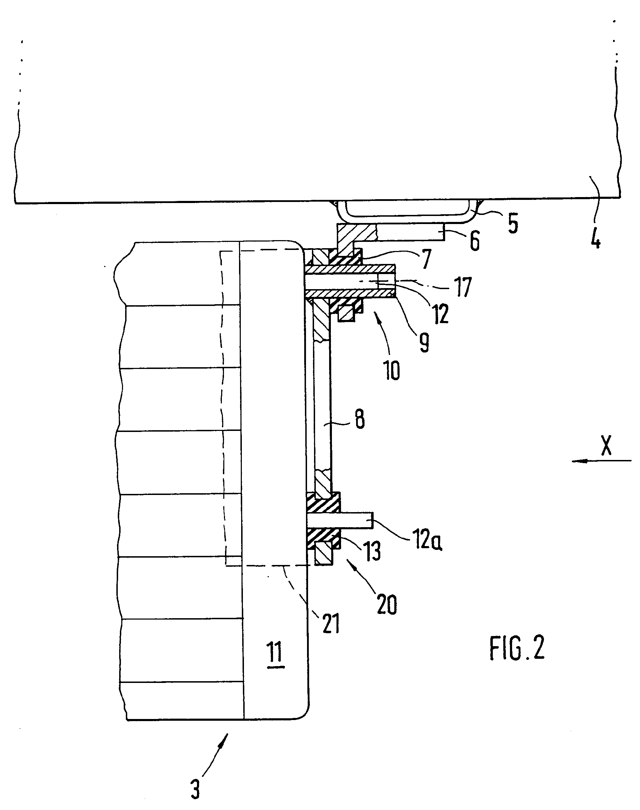

In Fig. 2 ist ein unterer Querträger 4 des Kraftfahrzeuges 1 mit einem daran befestigten Lagerbock 5 zu erkennen, an dem ein oberer Schenkel eines L-förmigen Lagerwinkels 6 angeschraubt ist. Im unteren Schenkel des Lagerwinkels 6 sitzt in einer kreisförmigen Ausnehmung eine Gummibuchse 7, die in ihrer Bohrung ein mit einer als Halteelement ausgebildeten Konsole 8 verschweißtes zylindrisches Rohrstück 9 aufnimmt. Die Gummibuchse 7 und das Rohrstück 8 bilden gemeinsam ein Schwenklager 10, dessen Längsachse parallel zum Querträger 4 verläuft. Die Konsole 8 wird durch ein L-förmiges Blechprofil gebildet. Ein erster Schenkel des Profiles verläuft parallel zum Lagerwinkel 6 und ein zweiter Schenkel 21 des Profiles ist zum ersten Schenkel abgewinkelt und stützt den Kühler rückseitig ab.

Die Halterung für den Ölkühler 3 besteht im wesentlichen aus den zwei Konsolen 8, die zwischen den Lagerwinkeln 6 angeordnet sind, wobei die Schenkel 21 der Konsolen 8 gegeneinandergerichtet sind.

Ein Kühlergehäuse 11 beinhaltet an seinen beiden Längsseiten je zwei übereinanderliegende Zapfen 12 und 12a, über die das Kühlergehäuse 11 in die Konsolen 8 eingehängt ist. Ein erster Zapfen 12 wird von einer Bohrung eines zylindrischen Rohrstücks 9 und der zweite Zapfen 12a von einer Gummibuchse 13, die in einer Bohrung der Konsole 8 sitzt, aufgenommen.

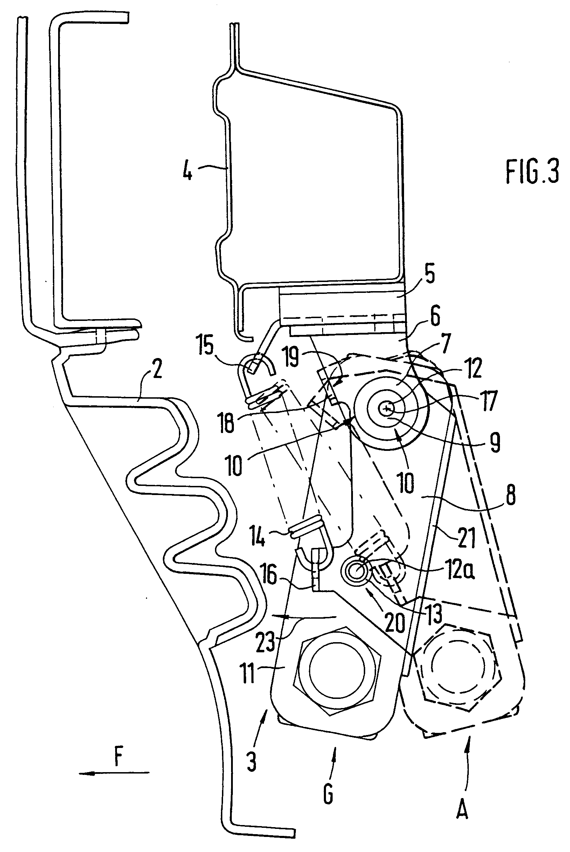

In der Seitenansicht (Fig. 3) ist eine Feder 14 dargestellt, die einerseits an einer vorkragenden Lasche 15 des Lagerbocks 5 und andererseits z. B. an einer Lasche 16 der Konsole 8 angelenkt ist. Diese Lasche 16 ist Bestandteil der Konsole 8 und ist gegenüber dem abgewinkelten Schenkel 21 rechtwinkelig nach außen gebogen.

Die Feder 14 ist vorgespannt und verschwenkt den Kühler 3 in Fahrtrichtung F um eine aus den Lagern 10 gebildete Schwenkachse 17. Über eine Lasche 18 am ersten Schenkel der Konsole 8 wird die durch die Feder 14 ausgelöste Drehbewegung in Pfeilrichtung 23 an einem Anschlag 19 des Lagerwinkels 6 abgestützt.

Nicht dargestellt ist die flexible Verbindung des Kühlergehäuses 11 über zwei Verbindungsleitungen mit dem Motor.

Die Feder 14 ist im dargestellten Beispiel vorzugsweise als Spiralzugfeder ausgebildet; jedoch können auch andere elastische Elemente verwendet werden. Werden diese auf der dem Anschlag 19 entgegengesetzten Seite zwischen Konsole 8 und Lagerbock 5 angebracht, so können auch Druckelemente eingesetzt werden.

In der Grundposition G schwenken die Federn 14 die Konsolen 8 mit dem Kühler 3 um die Drehachse 17 in Fahrtrichtung F gegen die Anschläge 19 und halten die Konsolen 8 dort durch die Vorspannkraft der Federn 14.

Im Falle eines Aufpralles des elastischen Verkleidungsteiles 2 auf einen festen Gegenstand wird dieses verformt. Ist die Verformung so groß geworden, daß das elastische Verkleidungsteil 2 den Ölkühler 3 berührt, wird dieser gegen die Vorspannung der Feder 14 aus der Grundposition G in Verformungsrichtung bis in eine Ausweichposition A verschwenkt. Die dazu notwendige Kraft entspricht zunächst der Vorspannkraft der Feder 14 und nimmt mit zunehmender Auslenkung stetig zu. Nach dem Aufprall federt das elastische Verkleidungsteil 2 in seine Ausgangslage zurück. Gleichzeitig schwenkt die Feder 14 den Ölkühler 3 wieder in seine Grundposition G. Wenn die Verformung des Verkleidungsteiles 2 so groß ist, daß eine bleibende Verformung eintritt, so verbleibt der Kühler 3 in der Ausweichposition A und kann nach dem Auswechseln des deformierten Verkleidungsteiles wieder in seine Grundposition verschwenkt werden.

## Patentansprüche

1. Halterung für einen Kühler (3) eines Kraftfahrzeuges (1), der
- benachbart eines frontseitigen Verkleidungsteiles (2) der Stoßstange unterhalb der Stoßstange angeordnet und
- über beiderseits des Kühlers (3) angeordnete Lager (10) um eine querliegende Schwenkachse (17) bewegbar ist,
- wobei der Kühler (3) zwischen zwei Halteelementen (8) eingespannt gehalten ist, die jeweils an ihren der Stoßstange zugewandten Enden die die Schwenkachse (17) bildende Lager (10) aufweisen und
- einerseits über mindestens eine Zugfeder (14) in eine in Fahrtrichtung (F) gezogene Grundposition (G) an durch ortsfeste Lagerwinkel (6) gebildete Anschläge (19) festsetzbar und
- andererseits in eine elastisch entgegen der Fahrtrichtung (F) zurückschwenkbare Ausweichposition (A) verstellbar ist.

2. Halterung nach Anspruch 1, dadurch gekennzeichnet, daß zwischen einem Querträger (4) und dem Lagerwinkel (6) ein Lagerbock (5) mit einer vorkragenden Lasche (15) angeordnet ist, und die Zugfeder (14) einerseits mit dieser Lasche (15) und andererseits mit dem Halteelement (8) unter Vorspannung verbunden ist.

3. Halterung nach Anspruch 1 oder 2, dadurch gekennzeichnet, daß der Anschlag (19) am Lagerwinkel (6) mit einer abgebogenen Lasche (18) des Halteelementes (8) in der Grundposition (G) in Eingriff steht.

4. Halterung nach einem oder mehreren der vorhergehenden Ansprüche, dadurch gekennzeichnet, daß das Schwenklager (10) für den Kühler (3) zwischen dem Lagerwinkel (6) und dem Halteelement (8) durch ein mit des Halteelement (8) verbundenes zylindrisches Rohrstück (9) gebildet wird, welches über eine am Lagerwinkel (6) eingesetzte Gummibuchse (7) beweglich gehalten ist.

5. Halterung nach einem oder mehreren der vorhergehenden Ansprüche, dadurch gekennzeichnet, daß der Kühler (3) über einen Zapfen (12) im Schwenklager (10) sowie über einen weiteren Zapfen (12a) in einem Festlager (20) des Halteelementes (8) gehalten ist, und die Zapfen (12, 12a) an den Längsseiten des Kühlers (3) übereinanderliegend angeordnet sind, und der Kühler (3) an abgewinkelten Schenkeln (21) der Halteelemente (8) formschlüssig gehalten ist.

## Claims

1. A mounting for a radiator (3) of a motor vehicle (1),
- arranged below the bumper and adjacent to a front moulding part (2) of the bumper, and
- movable about a transversely orientated pivot axis (17) by way of bearings (10) mounted on both sides of the radiator (3),
- wherein the radiator (3) is held clamped between two retaining members (8), each having the bearings (10) which form the pivot axis (17) at the ends thereof facing the bumper, and
- at one end is securable by way of at least one tension spring (14) in a normal position (G) pulled in the direction of travel (F) on stops (19) formed by stationary angle members (6) of the bearing and
- at the other end is displaceable into a deflected position (A) which can be pivoted back resiliently contrary to the direction of travel (F).

2. A mounting according to Claim 1, **characterized in that** a bearing bracket (5) with a projecting lug (15) is arranged between a transverse support (4) and the angle member (6) of the bearing, and the tension spring (14) is connected with pre-tensioning at one end to the said lug (15) and at the other end to the retaining member (8).

3. A mounting according to Claim 1 or 2, **characterized in that** the stop (19) on the angle member (6) of the bearing engages with a bent lug (18) of the retaining member (8) in the normal position (G).

4. A mounting according to one or more of the preceding Claims, **characterized in** **that** the pivot bearing (10) for the radiator (3) between the angle member (6) of the bearing and the retaining member (8) is formed by a cylindrical tube member (9) connected to the retaining member (8) and held in a displaceable manner by way of a rubber bush (7) inserted [into] the angle member (6) of the bearing.

5. A mounting according to one or more of the preceding Claims, **characterized in** **that** the radiator (3) is held by way of a pin (12) in the pivot bearing (10) and by way of a further pin (12a) in a fixed bearing (20) of the retaining member (8), and the pins (12, 12a) are arranged one above the other on the longitudinal sides of the radiator (3), and the radiator (3) is held with positive locking on angled arms (21) of the retaining members (8).

## Revendications

1. Fixation pour un radiateur (3) d'un véhicule automobile (1), qui
- est monté à proximité d'un élément de revêtement (2) frontal du pare-chocs au-dessous de celui-ci et
- est déplaçable par des paliers (10), placés des deux côtés du radiateur (3), autour d'un axe de pivotement (17) transversal,
- le radiateur (3) étant maintenu serré entre deux éléments de fixation (8), qui présentent chacun, à leurs extrémités tournées vers le pare-chocs, les paliers (10) formant l'axe de pivotement (17) et
- pouvant être fixé d'une part, par au moins un ressort de traction (14), dans une position de base (G), tirée dans le sens de la marche (F), contre des butées (19) formées par des équerres d'appui (6) fixes et
- pouvant être réglé, d'autre part, dans une position d'évitement (A), rappelée élastiquement dans le sens contraire au sens de la marche (F).

2. Fixation selon la revendication 1, caractérisée en ce qu'entre une traverse (4) et l'équerre d'appui (6), il est prévu un support d'appui (5) avec une attache (15) en porte-à-faux, et en ce que le ressort de traction (14) est relié, sous précontrainte, d'une part avec cette attache (15) et d'autre part avec l'élément de fixation (1).

3. Fixation selon les revendications 1 ou 2, caractérisée en ce que la butée (19) contre l'équerre d'appui (6) est en prise, dans la position de base, avec une attache (8) repliée de l'élément de fixation (8).

4. Fixation selon une ou plusieurs des revendications précédentes, caractérisée en ce que le palier de pivotement (10) destiné au radiateur (3) est formé, entre l'équerre d'appui (6) et l'élément de fixation (8), par une pièce tubulaire (9) cylindrique, reliée à l'élément de fixation (8), laquelle pièce tubulaire est maintenue mobile par une douille en caoutchouc (7), placée sur l'équerre d'appui (6).

5. Fixation selon une ou plusieurs des revendications précédentes, caractérisée en ce que le radiateur (3) est maintenu par un tourillon (12) dans le palier de pivotement (10) ainsi que par un autre tourillon (12a) dans un palier fixe (20) de l'élément de fixation (8) et les tourillons (12, 12a) sont superposés sur les grands côtés du radiateur (3) et le radiateur (3) est maintenu par concordance de forme sur des branches coudées (21) des éléments de fixation (8).
